(19) Europäisches Patentamt / European Patent Office / Office européen des brevets

(11) **EP 4 451 579 A1**

(12) **EUROPEAN PATENT APPLICATION**
published in accordance with Art. 153(4) EPC

(43) Date of publication:
**23.10.2024 Bulletin 2024/43**

(21) Application number: **23736973.1**

(22) Date of filing: **03.01.2023**

(51) International Patent Classification (IPC):
**H04B 17/10** (2015.01)    **H04W 72/04** (2023.01)
**H04W 52/14** (2009.01)

(52) Cooperative Patent Classification (CPC):
**H04B 17/10; H04L 5/14; H04W 24/08;**
**H04W 52/14; H04W 72/04;** Y02D 30/70

(86) International application number:
**PCT/CN2023/070072**

(87) International publication number:
**WO 2023/131108 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.01.2022 CN 202210016042**

(71) Applicant: **Huawei Technologies Co., Ltd.**
**Shenzhen, Guangdong 518129 (CN)**

(72) Inventor: **LIU, Ye**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **COMMUNICATION METHOD, APPARATUS AND SYSTEM**

(57)    A communication method, apparatus, and system are provided, to decrease a degree of sensitivity degradation and reduce impact of the sensitivity degradation on network coverage performance. In the method, a network device sends first configuration information to a terminal device. When the first configuration information indicates that the terminal device is allowed to reduce a transmit power, the terminal device reduces the transmit power based on a power adjustment factor if a difference between reference sensitivity of a first power class and reference sensitivity of a second power class is greater than or equal to a first threshold in configured channel bandwidth. Before the transmit power is reduced, a power class of the terminal device is the first power class. The second power class is lower than the first power class.

FIG. 3

**Description**

This application claims priority to Chinese Patent Application No. 202210016042.9, filed with the China National Intellectual Property Administration on January 7, 2022 and entitled "COMMUNICATION METHOD, APPARATUS, AND SYSTEM", which is incorporated herein by reference in its entirety.

**TECHNICAL FIELD**

This application relates to the communication field, and in particular, to a communication method, apparatus, and system.

**BACKGROUND**

A large quantity of new radio (new radio, NR) time division duplex (time division duplex, TDD) high power user equipments (high power user equipments, HPUEs) are introduced in Release (release, Rel) 15 and Rel-16 phases of the 3rd generation partnership project (3rd generation partnership project, 3GPP), and the new radio time division duplex high power user equipment becomes a mainstream UE form of NR.

For an operator having a small quantity of TDD spectra, introducing an HPUE in a frequency division duplex (frequency division duplex, FDD) band to increase a peak rate of a cell edge user becomes an important requirement. However, when the HPUE is introduced in the FDD band, a problem of degradation of receiver sensitivity caused by a high power may exist.

**SUMMARY**

This application provides a communication method, apparatus, and system, to reduce impact of sensitivity degradation on network coverage performance.

According to a first aspect, a communication method is provided. The method may be performed by a terminal device, may be performed by a part of a terminal device, for example, a processor, a chip, a chip system or the like of the terminal device, or may be implemented by a logic module or software that can implement all or a part of functions of a terminal device. In this application, an example in which a terminal performs the method is used for description. According to the method, a power class of the terminal device is a first power class. The terminal device receives first configuration information from a network device. When the first configuration information indicates that the terminal device is allowed to reduce a transmit power, the terminal device reduces a transmit power class based on a power adjustment factor if a difference between reference sensitivity of the first power class and reference sensitivity of a second power class is greater than or equal to a first threshold in configured channel bandwidth.

According to this solution, the network device controls, by using the first configuration information, whether the terminal device reduces the transmit power. Therefore, the network device may send the first configuration information to the terminal device when an MSD problem may exist. Based on the first configuration information, the terminal device reduces the transmit power when MSD is greater than or equal to the first threshold. In this way, impact of transmitting on receiving is reduced, and impact of sensitivity degradation on network coverage performance is reduced. When the MSD problem may not exist, the network device does not send the first configuration information. In this way, a problem that an SNR of a signal transmitted by the terminal device is reduced because the terminal device reduces the transmit power when the MSD actually does not exist is avoided, and performance of receiving the transmitted signal by the network device is improved.

In addition, in comparison with a current hybrid duplex solution, in the solution of this application, different terminal devices do not need to be scheduled to be in different duplex modes, and therefore the terminal devices do not need to be distinguished. This reduces implementation complexity on a network device side and implementation is easy. In addition, after the terminal device reduces the transmit power, because the impact of transmitting on receiving is reduced, the terminal device can still work in a full duplex mode. In this way, in comparison with the hybrid duplex solution, spectrum utilization can be improved.

With reference to the first aspect, in an implementation of the first aspect, the power adjustment factor is a first value. The first value is a difference between a power class power corresponding to the first power class and a power class power corresponding to the second power class. Based on this implementation, the terminal device may adjust the power class from the first power class to the second power class.

With reference to the first aspect, in an implementation of the first aspect, a value range of the first threshold is [2, 5] dB. Based on this implementation, the value range of the first threshold is provided, so that a value of the first threshold is more flexible.

With reference to the first aspect, in an implementation of the first aspect, the first threshold is configured by the network device. Based on this implementation, the network device configures the first threshold, so that the network device may flexibly adjust the first threshold based on an actual case, to improve configuration flexibility of the first threshold.

With reference to the first aspect, in an implementation of the first aspect, the method further includes: receiving second configuration information from the network device, where the second configuration information is used to configure a threshold set, and the threshold set includes the first threshold; and receiving indication information from the network device, where the indication information is used to activate the first threshold.

Based on this implementation, the network device may configure a plurality of thresholds in the threshold set, and select one of the thresholds as the first threshold, so that diversity of the value of the first threshold can be improved.

With reference to the first aspect, in an implementation of the first aspect, reducing the transmit power class based on the power adjustment factor if the difference between the reference sensitivity of the first power class and the reference sensitivity of the second power class is greater than or equal to the first threshold includes: reducing the transmit power class based on the power adjustment factor if the difference between the reference sensitivity of the first power class and the reference sensitivity of the second power class is greater than or equal to the first threshold and a signal to interference plus noise ratio SINR of intra-frequency measurement performed by the terminal device in a radio resource control RRC connected state is less than or equal to a second threshold.

Based on this implementation, when the SINR of the intra-frequency measurement in the RRC connected state is less than or equal to the second threshold, it indicates that the terminal device is at a cell edge. In this scenario, the impact of the sensitivity degradation on the network coverage performance is large. In this case, reducing the transmit power class of the terminal device can reduce the impact of transmitting on receiving, so that receiving performance of the terminal device is improved, and the impact on the network coverage performance is reduced. In addition, because an uplink coverage area of a network is usually determined by a smaller power class of a terminal device, when the terminal device is at the cell edge, even if the transmit power class is reduced, a case in which an uplink signal cannot be received is not caused. Therefore, in this scenario, impact of reducing the transmit power class by the terminal device on network performance is small.

With reference to the first aspect, in an implementation of the first aspect, that the first configuration information indicates that the terminal device is allowed to reduce a transmit power includes: The first configuration information indicates that the terminal device is allowed to reduce the transmit power based on cause of maximum sensitivity degradation MSD.

According to a second aspect, a communication method is provided. The method may be performed by a network device, may be performed by a part of a network device, for example, a processor, a chip, a chip system or the like of the network device, or may be implemented by a logic module or software that can implement all or a part of functions of a network device. In this application, an example in which a network device performs the method is used for description. The method includes: generating first configuration information, and sending the first configuration information to a terminal device. The first configuration information indicates that the terminal device is allowed to reduce a transmit power based on cause of maximum sensitivity degradation MSD.

According to this solution, the network device controls, by using the first configuration information, whether the terminal device reduces the transmit power. Therefore, the network device may send the first configuration information to the terminal device when an MSD problem may exist. Based on the first configuration information, the terminal device may reduce the transmit power when the MSD is greater than or equal to a first threshold. In this way, impact of transmitting on receiving is reduced, and impact of sensitivity degradation on network coverage performance is reduced. When the MSD problem may not exist, the network device does not send the first configuration information. In this way, a problem that an SNR of a signal transmitted by the terminal device is reduced because the terminal device reduces the transmit power when the MSD actually does not exist is avoided, and performance of receiving the transmitted signal by the network device is improved.

With reference to the second aspect, in an implementation of the second aspect, the method further includes: configuring a first threshold for the terminal device. The first threshold is used by the terminal device to determine whether to reduce a transmit power class.

With reference to the second aspect, in an implementation of the second aspect, the configuring a first threshold for the terminal device includes: sending second configuration information and indication information to the terminal device. The second configuration information is used to configure a threshold set, and the threshold set includes the first threshold. The indication information is used to activate the first threshold.

With reference to the second aspect, in an implementation of the second aspect, a value range of the first threshold is [2, 5] dB.

For technical effects brought by any implementation of the second aspect, refer to technical effects brought by corresponding implementations of the first aspect. Details are not described herein again.

According to a third aspect, a bandwidth configuration method is provided. The method may be performed by a network device, may be performed by a part of a network device, for example, a processor, a chip, a chip system or the like of the network device, or may be implemented by a logic module or software that can implement all or a part of functions of a network device. In this application, an example in which a terminal performs the method is used for description. The method includes: sending configuration information to a terminal device. The configuration information is used to configure cell-level uplink channel bandwidth for the terminal device. Indication information is sent to the terminal device if the uplink channel bandwidth meets a first condition. The indication information is used to activate a first bandwidth part BWP of the uplink channel bandwidth, and in a plurality of BWPs of the uplink channel bandwidth, the first BWP is a BWP whose bandwidth is the smallest and/or a BWP whose lower boundary is farthest from a receive band.

According to this solution, the network device configures the cell-level uplink channel bandwidth for the terminal device, and activates, by using the indication information, the BWP whose bandwidth is the smallest and/or the BWP whose lower boundary is farthest from the receive band in the uplink channel bandwidth, so that the terminal device performs uplink transmission in the activated BWP. Because the bandwidth of the BWP in which the uplink transmission is performed is smaller and/or the lower boundary of the BWP in which the uplink transmission is performed is farther away from the receive band, impact of transmitting on receiving is small. This can reduce the impact of transmitting on receiving, and further reduce impact of sensitivity degradation on network performance. In addition, in comparison with a current hybrid duplex solution, in this solution, implementation complexity on a network device side can be reduced and spectrum utilization can be improved.

With reference to the third aspect, in an implementation of the third aspect, the first condition includes: in the uplink channel bandwidth, a difference between reference sensitivity of a first power class and reference sensitivity of a second power class is greater than or equal to a first threshold; or the uplink channel bandwidth is greater than or equal to a second threshold.

Based on this implementation, when MSD is severe or the uplink channel bandwidth is large, in the uplink channel bandwidth, the BWP whose bandwidth is the smallest and/or the BWP that is farthest from the receive band may be activated, to reduce the impact of transmitting on receiving, and further reduce the impact of the sensitivity degradation on the network performance.

With reference to the third aspect, in an implementation of the third aspect, a value range of the first threshold is [2, 5] dB, and/or the second threshold is 20 MHz.

According to a fourth aspect, a communication apparatus is provided, to implement the foregoing methods. The communication apparatus may be the terminal device in the first aspect, or an apparatus included in the terminal device, such as a chip. Alternatively, the communication apparatus may be the network device in the second aspect or the third aspect, or an apparatus included in the network device, such as a chip. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible designs, the communication apparatus may include a transceiver module and a processing module. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface. The processing module may be configured to implement a processing function in any one of the foregoing aspects and any one of the possible implementations of the foregoing aspects.

In some possible designs, the transceiver module includes a sending module and a receiving module, respectively configured to implement the sending function and the receiving function in any one of the foregoing aspects and any one of the possible implementations of the foregoing aspects.

According to a fifth aspect, a communication apparatus is provided, including a processor and a memory. The memory is configured to store computer instructions. When the processor executes the instructions, the communication apparatus is enabled to perform the method in any one of the foregoing aspects. The communication apparatus may be the terminal device in the first aspect, or an apparatus included in the terminal device, such as a chip. Alternatively, the communication apparatus may be the network device in the second aspect or the third aspect, or an apparatus included in the network device, such as a chip.

According to a sixth aspect, a communication apparatus is provided, including a processor and a communication interface. The communication interface is configured to communicate with a module outside the communication apparatus. The processor is configured to execute a computer program or instructions, so that the communication apparatus performs the method in any one of the foregoing aspects. The communication apparatus may be the terminal device in the first aspect, or an apparatus included in the terminal device, such as a chip. Alternatively, the communication apparatus may be the network device in the second aspect or the third aspect, or an apparatus included in the network device, such as a chip.

According to a seventh aspect, a communication apparatus is provided, including a logic circuit and an interface circuit. The interface circuit is configured to input and/or output information. The logic circuit is configured to perform the method in any one of the foregoing aspects, and perform processing based on the input information and/or generate the output information. The communication apparatus may be the terminal device in the first aspect, or an apparatus included in the terminal device, such as a chip. Alternatively, the communication apparatus may be the network device in the second aspect or the third aspect, or an apparatus included in the network device, such as a chip.

With reference to the seventh aspect, in an implementation of the seventh aspect, when the communication apparatus is configured to implement a function of the terminal device, descriptions are shown as follows.

In some possible designs, the input information is first configuration information. Correspondingly, the performing processing based on the input information includes: when the first configuration information indicates that the terminal device is allowed to reduce a transmit power, reducing a transmit power class based on a power adjustment factor if a difference between reference sensitivity of a first power class and reference sensitivity of a second power class is greater than or equal to a first threshold in configured channel bandwidth.

In some possible designs, the input information may alternatively be second configuration information and indication information. Correspondingly, the performing processing based on the input information includes: determining a first threshold based on the second configuration information and the indication information.

With reference to the seventh aspect, in an implementation of the seventh aspect, when the communication apparatus is configured to implement a function of the network device in the second aspect, descriptions are shown as follows.

In some possible designs, the output information is first configuration information, and the first configuration information indicates that the terminal device is allowed to reduce a transmit power based on cause of maximum sensitivity degradation MSD.

In some possible designs, the output information may alternatively be second configuration information and indication information.

With reference to the seventh aspect, in an implementation of the seventh aspect, when the communication apparatus is configured to implement a function of the network device in the third aspect, descriptions are shown as follows.

In some possible designs, the output information may be configuration information and indication information. The configuration information is used to configure cell-level uplink channel bandwidth for the terminal device. The indication information is used to activate a first bandwidth part BWP of the uplink channel bandwidth, and in a plurality of BWPs of the uplink channel bandwidth, the first BWP is a BWP whose bandwidth is the smallest and/or a BWP whose lower boundary is farthest from a receive band.

According to an eighth aspect, a communication apparatus is provided, including an interface circuit and a processor. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor. The processor is configured to execute the computer-executable instructions, so that the communication apparatus performs the method according to any one of the foregoing aspects. The communication apparatus may be the terminal device in the first aspect, or an apparatus included in the terminal device, such as a chip. Alternatively, the communication apparatus may be the network device in the second aspect or the third aspect, or an apparatus included in the network device, such as a chip.

According to a ninth aspect, a communication apparatus is provided, including at least one processor. The processor is configured to execute a computer program or instructions, so that the communication apparatus performs the method in any one of the foregoing aspects. The communication apparatus may be the terminal device in the first aspect, or an apparatus included in the terminal device, such as a chip. Alternatively, the communication apparatus may be the network device in the second aspect or the third aspect, or an apparatus included in the network device, such as a chip.

In some possible designs, the communication apparatus includes a memory, and the memory is configured to store necessary program instructions and data. The memory may be coupled to the processor, or may be independent of the processor.

In some possible designs, the communication apparatus may be a chip or a chip system. When the apparatus is the chip system, the apparatus may include a chip, or may include a chip and another discrete component.

According to a tenth aspect, a computer-readable storage medium is provided. The computer-readable storage medium stores instructions. When the instructions are run on a communication apparatus, the communication apparatus is enabled to perform the method in any one of the foregoing aspects.

According to an eleventh aspect, a computer program product including instructions is provided. When the computer program product runs on a communication apparatus, the communication apparatus is enabled to perform the method in any one of the foregoing aspects.

It may be understood that when the communication apparatus provided in any one of the fourth aspect to the eleventh aspect is a chip, the foregoing sending action/function may be understood as output information, and the foregoing receiving action/function may be understood as input information.

For technical effects brought by any design manner in the fourth aspect to the eleventh aspect, refer to technical effects brought by different design manners in the first aspect, the second aspect, or the third aspect. Details are not described herein again.

According to a twelfth aspect, a communication system is provided. The communication system includes the network device and the terminal device in the foregoing aspects.

## BRIEF DESCRIPTION OF DRAWINGS

FIG. 1 is a diagram of an architecture of a communication system according to this application;
FIG. 2 is a diagram of structures of a terminal device and a network device according to this application;
FIG. 3 is a schematic flowchart of a communication method according to this application;
FIG. 4 is a schematic flowchart of another communication method according to this application;
FIG. 5 is a schematic flowchart of a bandwidth configuration method according to this application;
FIG. 6 is a diagram of distribution of a BWP according to this application;
FIG. 7 is a diagram of distribution of another BWP according to this application;
FIG. 8 is a diagram of distribution of still another BWP according to this application;
FIG. 9 is a diagram of a structure of another terminal device according to this application;
FIG. 10 is a diagram of a structure of another network device according to this application; and
FIG. 11 is a diagram of a structure of a communication apparatus according to this application.

## DESCRIPTION OF EMBODIMENTS

In descriptions of this application, unless otherwise specified, "/" indicates that associated objects are in an "or" relationship. For example, A/B may indicate A or B. "And/or" in this application merely describes an association relationship between associated objects and indicates that three relationships may exist. For example, A and/or B may indicate three cases: Only A exists, both A and B exist, or only B exists, where A and B may be singular or plural.

In the descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, for ease of clearly describing technical solutions in embodiments of this application, words such as "first", "second" and the like are used in embodiments of this application to distinguish between same items or similar items that have basically same functions and purposes. A person skilled in the art may understand that the words such as "first", "second", and the like do not limit a quantity and an execution sequence, and the words such as "first", "second", and the like do not indicate a definite difference.

In embodiments of this application, a word "example", "for example", or the like is used to represent giving an example, an illustration, or a description. Any embodiment or design solution described as an "example" or "for example" in embodiments of this application should not be explained as being more preferred or having more advantages than another embodiment or design solution. Exactly, use of the word such as "example", "for example", or the like is intended to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any proper manner. It may be understood that sequence numbers of processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on requirements. Correspondingly, the apparatus provided in embodiments of this application may also correspondingly implement these features or functions. Details are not described herein.

For ease of understanding the technical solutions in embodiments of this application, the following first briefly describes technologies or terms related to this application.

First, receiver sensitivity is described as follows.

The receiver sensitivity may be a minimum signal receive power that ensures normal operation of a receiver. When a signal arrives at the receiver and signal energy is less than nominal receiver sensitivity, the receiver cannot correctly receive information transmitted by a transmitting end. Smaller receiver sensitivity indicates better receiver performance.

Second, a power class (power class, PC) is described as follows.

The power class may be used to reflect a maximum transmit power capability of a terminal device at the power class, and may be reported by the terminal device to a network device by using a band (band) as a granularity. In a new radio (new radio, NR) system, a transmit power class of a terminal device may include a power class 2 (power class 2, PC2) and a power class 3 (power class 3, PC3).

Each transmit power class corresponds to a power class power $P_{PowerClass}$, and the power class power indicates an upper limit of a maximum transmit power of the terminal device in a band at a power class corresponding to the power class power. For example, $P_{PowerClass}$ corresponding to the PC2 is 26 milliwatt decibels (dBm), and $P_{PowerClass}$ corresponding to the PC3 is 23 dBm. In some embodiments, a terminal device whose power class is the PC2 may be referred to as a high power terminal device.

The power class determines the upper limit of the maximum transmit power of the terminal device. In actual application, a usable maximum transmit power of the terminal device, that is, $P_{CMAX,f,c}$ (which is referred to as a configuration power or a usable maximum transmit power of a carrier $f$ in a serving cell $c$), meets the following formula:

$$P_{CMAX\_L,f,c} \leq P_{CMAX,f,c} \leq P_{CMAX\_H,f,c}$$

$$P_{CMAX\_L,f,c} = \min\{P_{EMAX,c} - \Delta T_{C,c}, (P_{PowerClass} - \Delta P_{PowerClass}) - $$
$$\max(\max(MPR_c + \Delta MPR_c, A - MPR_c) + \Delta T_{IB,c} + \Delta T_{C,c} + \Delta T_{RxSRS}, P - MPR_c)\}$$

$$P_{CMAX\_H,f,c} = \min\{P_{EMAX,c}, P_{PowerClass} - \Delta P_{PowerClass}\}$$

It can be learned from the foregoing formula that a value of the usable maximum power of the terminal device is within a range based on an implementation capability of the terminal device. A maximum value of this range is determined by the power class of the terminal device. A minimum value of this range is determined by power back-off parameters such as $MPR_c$, $A\text{-}MPR_c$, and the like based on the power class.

In the foregoing formula, $\Delta P_{PowerClass}$ is a power adjustment factor. For example, the power adjustment factor may be used to improve a power in Pi/2 binary phase shift keying (binary phase shift keying, BPSK), or may be used to resolve a specific absorption rate (specific absorption rate, SAR) problem of radio frequency (radio frequency, RF) energy absorbed by a human body.

Currently, in a frequency division duplex (frequency division duplex, FDD) high power user equipment (high power user equipment, HPUE) work item (work item, WI) initiated in Release (release, Rel) 17 of the 3rd generation partnership project (3rd generation partnership project, 3GPP), two FDD bands (band) are defined: a band n1 and a band n3. In addition, for example, an FDD band further includes a band n2, and specific frequency ranges of the three bands are shown in the following Table 1.

**Table 1**

| n1 | 1920 MHz to 1980 MHz | 2110 MHz to 2170 MHz | FDD |
|----|----------------------|----------------------|-----|
| n2 | 1850 MHz to 1910 MHz | 1930 MHz to 1990 MHz | FDD |
| n3 | 1710 MHz to 1785 MHz | 1805 MHz to 1880 MHz | FDD |

One of two frequency ranges of each band is an uplink transmit band, and the other is a downlink receive band. It can be learned from Table 1 that, a spacing between a transmit band and a receive band of n3 is 20 megahertz (MHz), a spacing between receiving and transmitting is small, and receiver sensitivity is greatly affected by far-end noise of a transmit signal. In other words, in the n3 band, a maximum sensitivity degradation (maximum sensitivity degradation, MSD) problem exists when the terminal device works at the PC2 compared with that when the terminal device works at the PC3.

For example, Table 2 shows MSD analysis of a PC2 terminal device corresponding to different bandwidth in each band compared with a PC3 terminal device corresponding to different bandwidth in each band.

**Table 2**

| | Bandwidth | 5 | 10 | 15 | 20 | 25 | 30 | 35 | 40 | 45 | 50 |
|---|---|---|---|---|---|---|---|---|---|---|---|
| | $N_{RB}$ | **25** | **52** | **79** | **106** | **133** | **160** | **188** | **216** | **242** | **279** |
| n1 | $N_{RB\_UL}$ | 25 | 50 | 75 | 100 | 128 | 128 | | 128 | 128 | 128 |
| | MSD | 0 | 0 | 0 | 0 | 0 | 0 | | 0 | 0 | 0 |
| n2 | $N_{RB\_UL}$ | 25 | 50 | 50 | 50 | 50 | 48 | 40 | | | |
| | MSD | 0 | 0 | 0 | 0 | 0 | **5.8** | **5.6** | | | |
| n3 | $N_{RB\_UL}$ | 25 | 50 | 50 | 50 | 50 | 50 | 50 | 50 | 50 | 50 |
| | MSD | 0 | 0 | 0 | 0 | 0 | 0 | **2** | **5.3** | **5.8** | **6.8** |

A unit of the bandwidth is MHz. $N_{RB}$ represents a quantity of resource blocks (resource block, RB) included in the bandwidth. $N_{RB\_UL}$ represents a quantity of uplink (uplink, UL) RBs included in the bandwidth. A value of MSD indicates a difference of reference sensitivity of the PC2 minus reference sensitivity of the PC3, and a unit is dB (dB). The reference sensitivity of the PC2 and the reference sensitivity of the PC3 may be defined by a protocol.

It may be learned from analysis of the foregoing table, for the n1 band, in different bandwidth, sensitivity of the PC2 does not degrade compared with sensitivity of the PC3. That is, MSD=0. However, for the n3 band, in a part of bandwidth, especially when bandwidth is large (for example, the bandwidth is greater than or equal to 35 MHz), MSD is large. In other words, sensitivity of the PC2 degrades more severely compared with sensitivity of the PC3. This may affect network coverage performance.

For a problem of sensitivity degradation caused by impact of transmitting performed by a high power terminal device on receiving in some FDD bands with a small spacing between a receive frequency and a transmit frequency, a solution of hybrid scheduling of half duplex (half duplex, HD) and full duplex is currently proposed. In this solution, a terminal device that performs transmitting at a maximum power at a cell edge is scheduled to be in a half duplex mode, and another terminal device is scheduled to be in a full duplex mode. In the half duplex mode, the network device schedules the terminal device to send a signal and simultaneously not receive a signal. In addition, the terminal device may report, to the network device, a capability of whether a hybrid duplex mode is supported, and the network device performs scheduling based on the capability of the terminal device.

However, in this solution, use of the hybrid duplex mode increases implementation complexity of the network device, and the half duplex mode reduces spectrum utilization of the terminal device. In addition, the MSD is a worst case defined based on a band. In actual application, based on frequency configuration and resource scheduling cases of the network device, an MSD problem does not necessarily exist. In this case, use of the half duplex mode also reduces the spectrum utilization.

In view of this, this application provides a communication method, for power adjustment, to reduce sensitivity degradation and reduce impact of the sensitivity degradation on network coverage performance. In addition, in comparison with the foregoing hybrid duplex solution, in the solution provided in this application, implementation complexity of a network device can be reduced and spectrum utilization can be improved.

The technical solutions in embodiments of this application may be applied to various communication systems. The communication system may be a 3rd generation partnership project (third generation partnership project, 3GPP) communication system, for example, a long term evolution (long term evolution, LTE) system, or may be a 5th generation (5th generation, 5G) mobile communication system, an NR system, or a vehicle to everything (vehicle to everything, V2X) system, or may be applied to an LTE and 5G hybrid networking system, a device-to-device (device-to-device, D2D) communication system, a machine-to-machine (machine-to-machine, M2M) communication system, an Internet of Things (internet of things, IoT), or another next generation communication system. Alternatively, the communication system may be a non-3GPP communication system. This is not limited.

The technical solutions in embodiments of this application may be applied to various communication scenarios, for example, may be applied to one or more of the following communication scenarios: enhanced mobile broadband (enhanced mobile broadband, eMBB), ultra-reliable low latency communication (ultra-reliable low latency communication, URLLC), machine type communication (machine type communication, MTC), massive machine type communication (massive machine type communication, mMTC), D2D, V2X, IoT and other communication scenarios.

The communication systems and the communication scenarios applicable to this application are merely examples for description. The communication systems and the communication scenarios applicable to this application are not limited thereto. This is uniformly described herein. Details are not described below again.

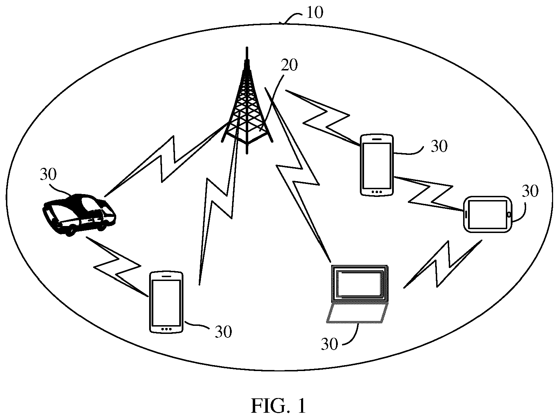

FIG. 1 shows a communication system 10 according to an embodiment of this application. The communication system 10 includes at least one network device 20, and one or more terminal devices 30 connected to the network device 20. Optionally, different terminal devices 30 may communicate with each other.

In some embodiments, the terminal device 30 in this application may be a device having a wireless transceiver function. The terminal device may also be referred to as a user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a wireless terminal or a wired terminal in IoT, V2X, D2D, M2M, a 5G network, or a future evolved public land mobile network (public land mobile network, PLMN). The terminal device may be deployed on land, including an indoor or outdoor device, a handheld device, or a vehicle-mounted device; may be deployed on a water surface (for example, on a ship or the like); or may be deployed in the air (for example, on a plane, a balloon, a satellite, or the like).

For example, the terminal device 30 may be an uncrewed aerial vehicle, an IoT device (for example, a sensor, an electricity meter, a water meter, or the like), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a hand-held device having a wireless communication function, a computing device or another processing device connected to a wireless modem, a vehicle-mounted device, a wearable device (which may also be referred to as a wearable intelligent device), a tablet computer or a computer having a wireless transceiver function, a virtual reality (virtual reality, VR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent networked vehicle, an uncrewed aerial vehicle having an uncrewed aerial vehicle to uncrewed aerial vehicle (UAV to UAV, U2U) communication capability, and the like. The terminal may be mobile or fixed. This is not specifically limited in this application.

In some embodiments, the network device 20 in this application is a device for connecting the terminal device 30 to a wireless network, and may be an evolved NodeB (evolved NodeB, eNB or eNodeB) in an LTE or LTE-Advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a transmission reception point (transmission reception point, TRP); or may be a base station in a future evolved PLMN; or may be a broadband network gateway (broadband network gateway, BNG), an aggregation switch, or a non-3GPP access device; or may be a radio controller in a cloud radio access network (cloud radio access network, CRAN); or may be an access point (access point, AP) in a Wi-Fi system; or may be a radio relay node or a radio backhaul node; or may be a device for implementing a base station function in IoT, a device for implementing a base station function in V2X, a device for implementing a base station function in D2D, or a device for implementing a base station function in M2M. Alternatively, the network device 20 may be a central unit (central unit, CU) or a distributed unit (distributed unit, DU), or may include a CU and a DU. This is not specifically limited in this embodiment of this application.

For example, the base station in this embodiment of this application may include base stations in various forms, for example, a macro base station, a micro base station (which is also referred to as a small cell), a relay station, and an access point. This is not specifically limited in this embodiment of this application.

It should be noted that the communication system described in this embodiment of this application is intended to describe the technical solutions in embodiments of this application more clearly, and does not constitute a limitation on the technical solutions provided in embodiments of this application. A person of ordinary skill in the art may know that, with evolution of a network architecture and emergence of new service scenarios, the technical solutions provided in embodiments of this application is also applicable to a similar technical problem.

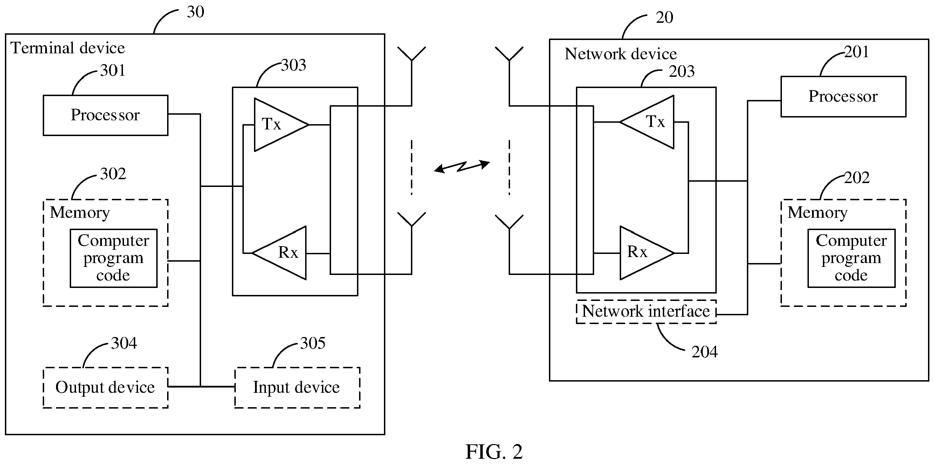

In some embodiments, the network device 20 and the terminal device 30 may also be referred to as communication apparatuses, and may be one general-purpose device or one dedicated device. This is not specifically limited in this embodiment of this application. FIG. 2 is a diagram of structures of a network device 20 and a terminal device 30 according to an embodiment of this application.

The terminal device 30 includes at least one processor (an example in which the terminal device 30 includes one processor 301 is used for description in FIG. 2) and at least one transceiver (an example in which the terminal device 30 includes one transceiver 303 is used for description in FIG. 2). Further, the terminal device 30 may further include at least one memory (an example in which the terminal device 30 includes one memory 302 is used for description in FIG. 2), at least one output device (an example in which the terminal device 30 includes one output device 304 is used for description in FIG. 2), and at least one input device (an example in which the terminal device 30 includes one input device 305 is used for description in FIG. 2).

The processor 301, the memory 302, and the transceiver 303 are connected through a communication line. The communication line is configured to communicate information between the foregoing components.

The processor 301 may be a general-purpose central processing unit (central processing unit, CPU), a dedicated processor, a microprocessor, an application-specific integrated circuit (application-specific integrated circuit, ASIC), or one or more integrated circuits configured to control program execution in the solutions of this application. For example, the processor 301 may be a baseband processor or a central processing unit. The baseband processor may be configured to process a communication protocol and communication data. The central processing unit may be configured to control a communication apparatus (such as a network device, a terminal device, chips of a terminal device and a network device, or the like), execute a software program, and process data of the software program. In specific implementation, in an embodiment, the processor 301 may alternatively include a plurality of CPUs, and the processor 301 may be a single-core (single-CPU) processor or a multi-core (multi-CPU) processor. The processor herein may refer to one or more devices, circuits, or processing cores configured to process data (for example, computer program instructions).

The memory 302 may be an apparatus having a storage function. For example, the memory may be a read-only memory (read-only memory, ROM) or another type of static storage device that can store static information and instructions, a random access memory (random access memory, RAM) or another type of dynamic storage device that can store information and instructions. The memory may alternatively be an electrically erasable programmable read-only memory (electrically erasable programmable read-only memory, EEPROM), a compact disc read-only memory (compact disc read-only memory, CD-ROM) or another compact disk storage, an optical disk storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, the memory is not limited thereto. The memory 302 may exist independently, and is connected to the processor 301 through the communication line. The memory 302 may alternatively be integrated with the processor 301.

The memory 302 is configured to store computer-executable instructions for executing the solutions of this application, and the execution is controlled by the processor 301. Specifically, the processor 301 is configured to execute the computer-executable instructions stored in the memory 302, to implement the method in this embodiment of this application.

Alternatively, in this application, the processor 301 may perform a processing-related function in the method provided in this application, and the transceiver 303 is responsible for communicating with another device or a communication network. This is not specifically limited in this embodiment of this application.

The computer-executable instructions in this application may also be referred to as application program code or computer program code. This is not specifically limited in this embodiment of this application.

The transceiver 303 may use any apparatus such as a transceiver, and is configured to communicate with another device or a communication network. The communication network may be, for example, Ethernet, a radio access network (radio access network, RAN), a wireless local area network (wireless local area network, WLAN), or the like. The transceiver 303 includes a transmitter (transmitter, Tx) and a receiver (receiver, Rx).

The output device 304 communicates with the processor 301, and may display information in a plurality of manners. For example, the output device 304 may be a liquid crystal display (liquid crystal display, LCD), a light emitting diode (light emitting diode, LED) display device, a cathode ray tube (cathode ray tube, CRT) display device, a projector (projector), or the like.

The input device 305 communicates with the processor 301, and may receive an input of a user in a plurality of manners. For example, the input device 305 may be a mouse, a keyboard, a touchscreen device, a sensing device, or the like.

The network device 20 includes at least one processor (an example in which the network device 20 includes one processor 201 is used for description in FIG. 2) and at least one transceiver (an example in which the network device 20 includes one transceiver 203 is used for description in FIG. 2). Further, the network device 20 may further include at least one memory (an example in which the network device 20 includes one memory 202 is used for description in FIG. 2) and at least one network interface (an example in which network device 20 includes one network interface 204 is used for description in FIG. 2). The processor 201, the memory 202, the transceiver 203, and the network interface 204 are connected through a communication line. The network interface 204 is configured to connect to a core network device through a link (for example, an S 1 interface), or connect to a network interface of another network device through a wired or wireless link (for example, an X2 interface) (not shown in FIG. 2). This is not specifically limited in this embodiment of this application. In addition, for related descriptions of the processor 201, the memory 202, and the transceiver 203, refer to descriptions of the processor 301, the memory 302, and the transceiver 303 in the terminal device 30. Details are not described herein again.

It may be understood that the structures shown in FIG. 2 do not constitute specific limitations on the terminal device 30 and the network device 20. For example, in some other embodiments of this application, the terminal device 30 and the network device 20 may include more or fewer parts than those shown in the figure, or combine some parts, or split some parts, or have different part arrangements. The parts shown in the figure may be implemented by hardware, software, or a combination of software and hardware.

With reference to the accompanying drawings, the following describes the method provided in embodiments of this application. It may be understood that, in embodiments of this application, an execution body may perform a part or all of the steps in embodiments of this application. The steps or operations are merely examples. Other operations or variations of various operations may alternatively be performed in embodiments of this application. In addition, the steps may be performed in a sequence different from a sequence presented in embodiments of this application, and not all the operations in embodiments of this application may be performed.

It should be noted that, in the following embodiments of this application, names of messages or names of parameters in messages of devices are merely examples, and the messages or the parameters may have other names in specific implementations. This is not specifically limited in embodiments of this application.

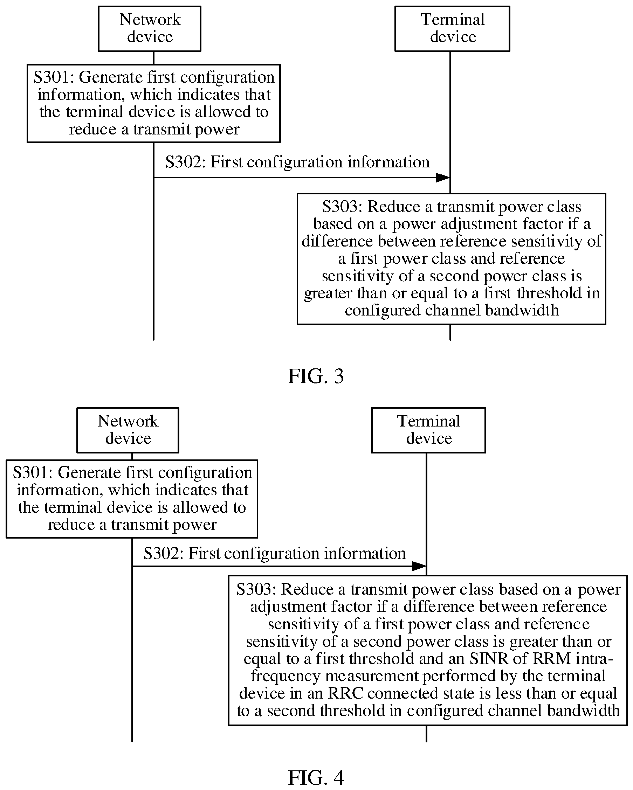

FIG. 3 shows a communication method according to this application. The method is for power adjustment. The method includes the following steps.

S301: A network device generates first configuration information.

The first configuration information indicates that a terminal device is allowed to reduce a transmit power. Further, the first configuration information indicates that the terminal device is allowed to reduce the transmit power based on cause of MSD.

It should be noted that, in this application, that the first configuration information indicates that a terminal device is allowed to reduce a transmit power may also be understood as that the first configuration information indicates that the terminal device is allowed to reduce a transmit power class. Further, the first configuration information indicates that the terminal device is allowed to reduce the transmit power class based on the cause of the MSD. The two may be replaced with each other. This is not specifically limited in this application.

A power class of the terminal device is a first power class. In defined power classes, there is a power class lower than the first power class. Therefore, the terminal device may be referred to as a high power terminal device.

Optionally, when an MSD problem may exist in scheduling of the terminal device by the network device, the first configuration information may be generated, so that the terminal device can reduce the transmit power, to reduce impact of transmitting on receiving. When an MSD problem may not exist in scheduling of the terminal device by the network device, or the network device can tolerate MSD caused by current scheduling, the network device may not generate the first configuration information, to limit a case in which the terminal device autonomously reduces the transmit power. This avoids reduction in a signal-to-noise ratio (signal-to-noise ratio, SNR) of a signal transmitted by the terminal device.

For example, a scheduling case in which the MSD problem does not exist may be that a spacing between a transmit frequency and a receive frequency that are scheduled by the network device is large. For example, it is assumed that the terminal device works in the n3 band shown in Table 1. The network device may schedule one of the transmit frequency and the receive frequency of the terminal device to be near 1710 MHz, the other one to be near 1805 MHz, and configured bandwidth is less than 20 MHz. In view of this, because the spacing between the transmit frequency and the receive frequency is large, the impact of transmitting on receiving is small or may be ignored. Therefore, the MSD problem may not exist, and the terminal device does not need to reduce the transmit power.

S302: The network device sends the first configuration information to the terminal device. Correspondingly, the terminal device receives the first configuration information from the network device.

Optionally, the first configuration information may be carried in radio resource control (radio resource control, RRC) signaling, for example, may be carried in a [*fddMsdReduction*] information element (information element, IE) of the RRC signaling. Certainly, the first configuration information may be carried in another manner. This is not specifically limited in this application.

After receiving the first configuration information, the terminal device may perform the following step S303. Alternatively, if the terminal device does not receive the first configuration information, it indicates that the network device does not allow the terminal device to autonomously reduce the transmit power based on the cause of the MSD. In this scenario, the terminal device may not perform the following step S303.

S303: The terminal device reduces the transmit power class based on a power adjustment factor if a difference between reference sensitivity of the first power class and reference sensitivity of a second power class is greater than or equal to a first threshold in configured channel bandwidth.

Optionally, the configured channel bandwidth is current operating bandwidth configured by the network device for the terminal device. The first power class is higher than the second power class. For example, the first power class is a PC2, and the second power class is a PC3.

Optionally, the reference sensitivity (reference sensitivity, REFSENS) of the first power class and the reference sensitivity of the second power class may be sensitivity defined in a protocol. The reference sensitivity of the first power class and the reference sensitivity of the second power class may have different values in different channel bandwidth.

The second power class is used as an example. In bandwidth 1, the reference sensitivity of the second power class is sensitivity 1. In bandwidth 2, the reference sensitivity of the second power class is sensitivity 2.

Optionally, the difference between the reference sensitivity of the first power class and the reference sensitivity of the second power class may reflect a degradation status of sensitivity of the terminal device at the first power class compared with sensitivity at the second power class. In other words, the difference between the reference sensitivity of the first power class and the reference sensitivity of the second power class may be a value of the MSD. Therefore, that the difference between the reference sensitivity of the first power class and the reference sensitivity of the second power class is greater than or equal to the first threshold in the configured channel bandwidth may also be described as that MSD for the configured channel bandwidth is greater than or equal to the first threshold.

Optionally, the first threshold may be defined in a protocol, may be configured by the network device, or may be determined by the terminal device. This is not specifically limited in this application.

Optionally, a value range of the first threshold is [2, 5] dB. [2,5] dB indicates that a minimum value of the first threshold may be 2 dB, and a maximum value may be 5 dB. In other words, a value of the first threshold may be any value between 2 and 5 (including 2 and 5). For example, the first threshold may be 3 dB.

Optionally, when the first threshold is configured by the network device, the network device may statically configure a threshold for the terminal device, and the threshold is the first threshold. Alternatively, the network device may semi-statically configure a plurality of thresholds for the terminal device, and the plurality of thresholds include the first threshold.

For example, the network device may send second configuration information to the terminal device. The second configuration information is used to configure a threshold set, and the threshold set includes information about the first threshold. Then, the network device may send indication information to the terminal device. The indication information is used to activate the first threshold. Correspondingly, after receiving the second configuration information, the terminal device may obtain a threshold in the threshold set. After receiving the indication information, the terminal device may learn that the first threshold is activated, to determine, by using the first threshold, whether to reduce the transmit power class.

Optionally, the second configuration information may be carried by using the RRC signaling. The indication information may be carried by using a medium access control-control element (medium access control-control element, MAC CE).

Optionally, the power adjustment factor is a first value. The first value is a difference between a power class power corresponding to the first power class and a power class power corresponding to the second power class. For example, the first power class is the PC2, and the second power class is the PC3. The power class power corresponding to the first power class is 26 dBm, and the power class power corresponding to the second power class is 23 dBm. In this case, the first value is 3 dB.

For example, the first power class is the PC2, the second power class is the PC3, and the first threshold is 3 dB. The power adjustment factor may be described as that, compared with a reference sensitivity level of a PC3 UE, a power adjustment factor used for a PC2 capable UE is 3 dB when the MSD for the configured channel bandwidth exceeds [3] dB ($\Delta P_{PowerClass}$ =3 dB for a power class 2 capable UE when MSD for the configured channel bandwidth exceeds [3] dB compared to power class 3 UE REFSENS level).

Optionally, that when the first value is the difference between a power class corresponding to the first power class and a power class corresponding to the second power class, the terminal device reduces the transmit power class based on the power adjustment factor may include: The terminal device adjusts the transmit power class from the first power class to the second power class based on the power adjustment factor.

According to this solution, in this application, the network device controls, by using the first configuration information, whether the terminal device reduces the transmit power. Therefore, the network device may send the first configuration information to the terminal device when the MSD problem may exist. Based on the first configuration information, the terminal device reduces the transmit power when the MSD is greater than or equal to the first threshold. In this way, the impact of transmitting on receiving is reduced, and impact of sensitivity degradation on network coverage performance is reduced. When the MSD problem may not exist, the network device does not send the first configuration information. In this way, a problem that the SNR of the signal transmitted by the terminal device is reduced because the terminal device reduces the transmit power when the MSD actually does not exist is avoided, and performance of receiving the transmitted signal by the network device is improved.

In addition, in comparison with a current hybrid duplex solution, in the solution of this application, different terminal devices do not need to be scheduled to be in different duplex modes, and therefore the terminal devices do not need to be distinguished. This reduces implementation complexity on a network device side and implementation is easy. In addition, after the terminal device reduces the transmit power, because the impact of transmitting on receiving is reduced, the terminal device can still work in a full duplex mode. In this way, in comparison with the hybrid duplex solution, spectrum utilization can be improved.

In some embodiments, as shown in FIG. 4, in the foregoing step S303, that the terminal device reduces the transmit power class based on a power adjustment factor if a difference between reference sensitivity of the first power class and reference sensitivity of a second power class is greater than or equal to a first threshold includes: the terminal device reduces the transmit power class based on the power adjustment factor if the difference between the reference sensitivity of the first power class and the reference sensitivity of the second power class is greater than the first threshold and a signal to interference plus noise ratio (signal to interference plus noise ratio, SINR) of intra-frequency measurement performed by the terminal device in an RRC connected state is less than or equal to a second threshold. The intra-frequency measurement is configured in radio resource management (radio resource management, RRM).

In other words, a network device may configure an SINR measurement item in configuration of the intra-frequency measurement of the RRM. The terminal device performs intra-frequency measurement in the RRC connected state based on RRM configuration of the network device. The terminal device reduces the transmit power class based on the power adjustment factor when the SINR of the intra-frequency measurement is less than or equal to the second threshold, and the difference between the reference sensitivity of the first power class and the reference sensitivity of the second power class is greater than or equal to the first threshold.

According to this solution, when the SINR of the RRM intra-frequency measurement in the RRC connected state is less than or equal to the second threshold, it indicates that the terminal device is at a cell edge. In this scenario, impact of sensitivity degradation on network coverage performance is large. In this case, reducing the transmit power class of the terminal device can reduce impact of transmitting on receiving, so that receiving performance of the terminal device is improved, and impact on the network coverage performance is reduced. In addition, because an uplink coverage area of a network is usually determined by a smaller power class of a terminal device, when the terminal device is at the cell edge, even if the transmit power class is reduced, a case in which an uplink signal cannot be received is not caused. Therefore, in this scenario, impact of reducing the transmit power class by the terminal device on network performance is small.

Optionally, if the SINR of the RRM intra-frequency measurement in the RRC connected state is greater than the second threshold, it indicates that the terminal device may be in a cell center. In this scenario, even if the terminal device is at the first power class, transmitting affects receiving. Because the terminal device is in the cell center, strength of a received signal may be strong. The terminal device can still normally receive the signal when transmitting affects receiving. Therefore, the terminal device may remain at the first power class without reducing the power class, to improve an SNR of an uplink signal.

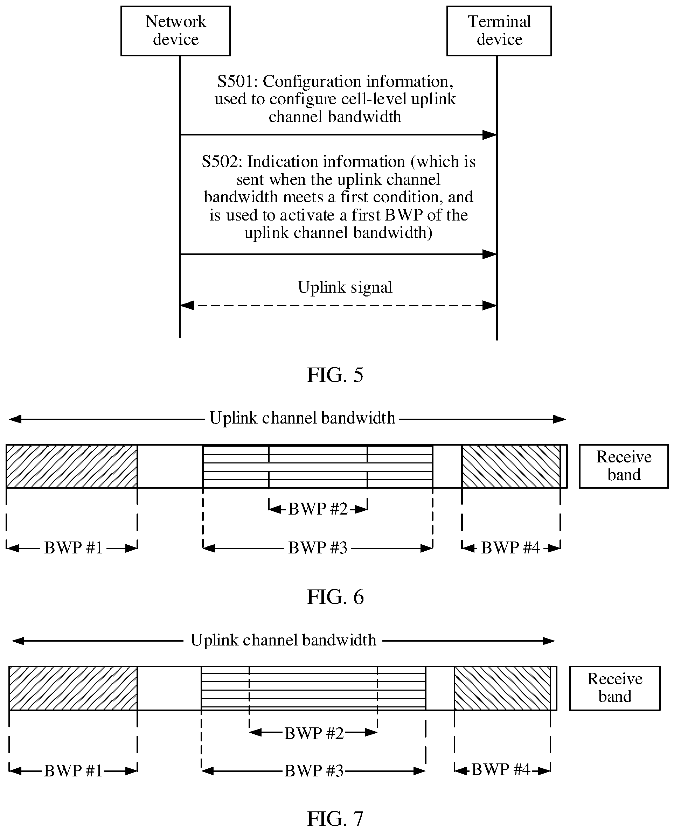

In the foregoing solution, the terminal device adjusts the power class to reduce the impact of transmitting on receiving. In addition, this application further provides a bandwidth configuration method. In the method, a network device reduces sensitivity degradation by configuring bandwidth. Refer to FIG. 5. The bandwidth configuration method includes the following steps.

S501: A network device sends configuration information to a terminal device. Correspondingly, the terminal device receives the configuration information from the network device.

The configuration information is used to configure cell-level uplink channel bandwidth for the terminal device. The uplink channel bandwidth includes a plurality of bandwidth parts (bandwidth parts, BWPs).

Optionally, a power class of the terminal device is a first power class. For the first power class, refer to related descriptions in the embodiment shown in FIG. 3. Details are not described herein again.

S502: The network device sends indication information to the terminal device if the uplink channel bandwidth meets a first condition. Correspondingly, the terminal device receives the indication information from the network device.

The indication information is used to activate a first BWP of the uplink channel bandwidth. In a plurality of BWPs of the uplink channel bandwidth, the first BWP is a BWP whose bandwidth is the smallest and/or a BWP whose lower boundary is farthest from a receive band. For example, the lower boundary may be a lowest frequency of the BWP.

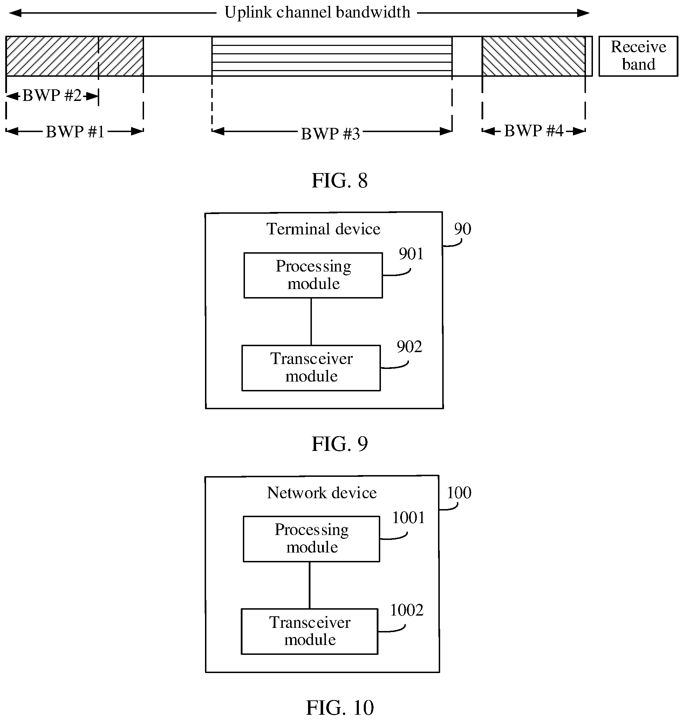

For example, the uplink channel bandwidth includes a BWP #1, a BWP #2, a BWP #3, and a BWP #4. As shown in FIG. 6, in the four BWPs, if bandwidth of the BWP #2 is the smallest, the first BWP is the BWP #2. Alternatively, as shown in FIG. 6, in four BWPs, a lower boundary of the BWP #1 is farthest from the receive band, and in this case, the first BWP is the BWP #1. Alternatively, as shown in FIG. 7, in the four BWPs, bandwidth of the BWP #1 and bandwidth of the BWP #2 are the same and are the smallest. Because a lower boundary of the BWP #1 is farthest from the receive band, the first BWP is the BWP #1. Alternatively, as shown in FIG. 8, in the four BWPs, lower boundaries of the BWP #1 and the BWP #2 overlap and are farthest from the receive band. Because bandwidth of the BWP #2 is less than bandwidth of the BWP #1, the first BWP is the BWP #2.

In a possible implementation, the first condition includes that, in the uplink channel bandwidth, a difference between reference sensitivity of the first power class and reference sensitivity of a second power class is greater than or equal to a first threshold. For details, refer to related descriptions in the embodiment shown in FIG. 3. The details are not described herein again.

In another possible implementation, the first condition includes that the first condition is that the uplink channel bandwidth is greater than or equal to a second threshold. In other words, the uplink channel bandwidth is large bandwidth. When the bandwidth is greater than or equal to the second threshold, a sensitivity degradation problem may exist. The second threshold may be defined in a protocol, or may be determined by the network device. This is not limited. For example, the second threshold may be, for example, 20 MHz. Certainly, the second threshold may alternatively be another value. This is not specifically limited in this application.

Optionally, after receiving the indication information, the terminal device may send an uplink signal in the first BWP. Correspondingly, the network device receives the uplink signal in the first BWP.

According to this solution, the network device configures the cell-level uplink channel bandwidth for the terminal device, and activates, by using the indication information, the BWP whose bandwidth is the smallest and/or the BWP that is farthest from the receive band in the uplink channel bandwidth, so that the terminal device performs uplink transmission in the activated BWP. Because the bandwidth of the BWP in which the uplink transmission is performed is smaller and/or the lower boundary of the BWP in which the uplink transmission is performed is farther away from the receive band, impact of transmitting on receiving is small. This can reduce the impact of transmitting on receiving, and further reduce impact of sensitivity degradation on network performance.

In addition, in comparison with a current hybrid duplex solution, in this solution, implementation complexity on a network device side can be reduced and spectrum utilization can be improved. For details, refer to related descriptions in the embodiment shown in FIG. 3. The details are not described herein again.

It may be understood that, in the foregoing embodiments, the methods and/or steps implemented by the network device may alternatively be implemented by a part (for example, a processor, a chip, a chip system, a circuit, a logic module, or software such as a chip or a circuit) that can be used in the network device. The methods and/or steps implemented by the terminal device may alternatively be implemented by a part (for example, a processor, a chip, a chip system, a circuit, a logic module, or software such as a chip or a circuit) that can be used in the terminal device.

The foregoing mainly describes the solutions provided in embodiments of this application from a perspective of interaction between network elements. Correspondingly, embodiments of this application further provide a communication apparatus, and the communication apparatus is configured to implement the foregoing methods. The communication apparatus may be the terminal device in the foregoing method embodiments, or an apparatus including the foregoing terminal device, or a part that can be used in the terminal device. Alternatively, the communication apparatus may be the network device in the foregoing method embodiments, or an apparatus including the foregoing network device, or a part that can be used in the network device.

It may be understood that, to implement the foregoing functions, the communication apparatus includes a corresponding hardware structure and/or a software module for performing the functions. A person skilled in the art should easily be aware that, in combination with units and algorithm steps of the examples described in embodiments disclosed in this specification, this application may be implemented by hardware or a combination of hardware and computer software. Whether a function is performed by the hardware or the hardware driven by the computer software depends on particular applications and design constraints of the technical solutions. A person skilled in the art may use different methods to implement the described functions for each particular application, but it should not be considered that this implementation goes beyond the scope of this application.

In embodiments of this application, the communication apparatus may be divided into function modules based on the foregoing method embodiments. For example, each function module may be obtained through division based on each corresponding function, or two or more functions may be integrated into one processing module. The foregoing integrated module may be implemented in a form of hardware, or may be implemented in a form of a software function module. It should be noted that division into the modules in embodiments of this application is an example, is merely division into logical functions, and may be other division during actual implementation.

In an implementation scenario, an example in which the communication apparatus is the terminal device in the foregoing method embodiments is used. FIG. 9 is a diagram of a structure of a terminal device 90. The terminal device 90 includes a processing module 901 and a transceiver module 902.

In some embodiments, the terminal device 90 may further include a storage module (which is not shown in FIG. 9), configured to store program instructions and data.

In some embodiments, the transceiver module 902 may also be referred to as a transceiver unit, and is configured to implement a sending function and/or a receiving function. The transceiver module 902 may include a transceiver circuit, a transceiver machine, a transceiver, or a communication interface.

In some embodiments, the transceiver module 902 may include a receiving module and a sending module, respectively configured to perform receiving and sending steps performed by the terminal device in the foregoing method embodiments, and/or configured to support another process of the technology described in this specification. The processing module 901 may be configured to perform processing steps performed by the terminal device in the foregoing method embodiments, and/or configured to support another process of the technology described in this specification.

For example, the transceiver module 902 is configured to receive first configuration information from a network device. The processing module 901 is configured to: when the first configuration information indicates that the communication apparatus is allowed to reduce a transmit power, reduce a transmit power class based on a power adjustment factor if a difference between reference sensitivity of a first power class and reference sensitivity of a second power class is greater than or equal to a first threshold in configured channel bandwidth.

Optionally, the power adjustment factor is a first value. The first value is a difference between a power class power corresponding to the first power class and a power class power corresponding to the second power class.

Optionally, a value range of the first threshold is [2, 5] dB.

Optionally, the first threshold is configured by the network device.

Optionally, the transceiver module 902 is further configured to receive second configuration information from the network device. The second configuration information is used to configure a threshold set, and the threshold set includes the first threshold. The transceiver module 902 is further configured to receive indication information from the network device. The indication information is used to activate the first threshold.

Optionally, that the processing module 901 is configured to reduce a transmit power class based on a power adjustment factor if a difference between reference sensitivity of a first power class and reference sensitivity of a second power class is greater than or equal to a first threshold includes: the processing module 901 is configured to reduce the transmit power class based on the power adjustment factor if the difference between the reference sensitivity of the first power class and the reference sensitivity of the second power class is greater than or equal to the first threshold and a signal to interference plus noise ratio SINR of intra-frequency measurement performed by the communication apparatus in a radio resource control RRC connected state is less than or equal to a second threshold.

Optionally, that the first configuration information indicates that the communication apparatus is allowed to reduce a transmit power includes: The first configuration information indicates that the communication apparatus is allowed to reduce the transmit power based on cause of maximum sensitivity degradation MSD.

All related content of the steps in the foregoing method embodiments may be cited in function descriptions of the corresponding function modules. Details are not described herein again.

In this application, the terminal device 90 is presented in a form of function modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the terminal device 90 may be in a form of the terminal device 30 shown in FIG. 2.

In an example, a function/implementation process of the processing module 901 in FIG. 9 may be implemented by using the processor 301 in the terminal device 30 shown in FIG. 2 by invoking computer-executable instructions stored in the memory 302, and a function/implementation process of the transceiver module 902 in FIG. 9 may be implemented by using the transceiver 303 in the terminal device 30 shown in FIG. 2.

In some embodiments, when the terminal device 90 in FIG. 9 is a chip or a chip system, a function/implementation process of the transceiver module 902 may be implemented by using an input/output interface (or a communication interface) of the chip or the chip system, and a function/implementation process of the processing module 901 may be implemented by using a processor (or a processing circuit) of the chip or the chip system.

The terminal device 90 provided in this embodiment may perform the foregoing method. Therefore, for technical effects that can be achieved by this embodiment, refer to the foregoing method embodiments. Details are not described herein again.

In an implementation scenario, an example in which the communication apparatus is the network device in the foregoing method embodiments is used. FIG. 10 is a diagram of a structure of a network device 100. The network device 100 includes a processing module 1001 and a transceiver module 1002.

In some embodiments, the network device 100 may further include a storage module (which is not shown in FIG. 10), configured to store program instructions and data.

In some embodiments, the transceiver module 1002 may also be referred to as a transceiver unit, and is configured to implement a sending function and/or a receiving function. The transceiver module 1002 may include a transceiver circuit, a transceiver machine, a transceiver, or a communication interface.

In some embodiments, the transceiver module 1002 may include a receiving module and a sending module, respectively configured to perform receiving and sending steps performed by the network device in the foregoing method embodiments, and/or configured to support another process of the technology described in this specification. The processing module 1001 may be configured to perform processing steps performed by the network device in the foregoing method embodiments, and/or configured to support another process of the technology described in this specification.

In a possible implementation, descriptions are shown as follows.

The processing module 1001 is configured to generate first configuration information. The first configuration information indicates that a terminal device is allowed to reduce a transmit power based on cause of maximum sensitivity degradation MSD. The transceiver module 1002 is configured to send the first configuration information to the terminal device.

Optionally, the processing module 1001 is further configured to configure a first threshold for the terminal device. The first threshold is used by the terminal device to determine whether to reduce a transmit power class.

Optionally, that the processing module 1001 is further configured to configure a first threshold for the terminal device includes: the processing module 1001 is further configured to send second configuration information to the terminal device via the transceiver module 1002, where the second configuration information is used to configure a threshold set, and the threshold set includes the first threshold; and the processing module 1001 is further configured to send indication information to the terminal device via the transceiver module 1002, where the indication information is used to activate the first threshold.

Optionally, a value range of the first threshold is [2, 5] dB.

In another possible implementation, descriptions are shown as follows.

The transceiver module 1002 is configured to send configuration information to a terminal device. The configuration information is used to configure cell-level uplink channel bandwidth for the terminal device. The processing module 1001 is configured to send indication information to the terminal device via the transceiver module 1002 when the uplink channel bandwidth meets a first condition. The indication information is used to activate a first bandwidth part BWP of the uplink channel bandwidth, and in a plurality of BWPs of the uplink channel bandwidth, the first BWP is a BWP whose bandwidth is the smallest and/or a BWP whose lower boundary is farthest from a receive band.

Optionally, the first condition includes: in the uplink channel bandwidth, a difference between reference sensitivity of a first power class and reference sensitivity of a second power class is greater than or equal to a first threshold. Alternatively, the uplink channel bandwidth is greater than or equal to a second threshold.

Optionally, a value range of the first threshold is [2, 5] dB, and/or the second threshold is 20 MHz.

All related content of the steps in the foregoing method embodiments may be cited in function descriptions of the corresponding function modules. Details are not described herein again.

In this application, the network device 100 is presented in a form of function modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the network device 100 may be in a form of the network device 20 shown in FIG. 2.

In an example, a function/implementation process of the processing module 1001 in FIG. 10 may be implemented by using the processor 201 in the network device 20 shown in FIG. 2 by invoking computer-executable instructions stored in the memory 202, and a function/implementation process of the transceiver module 1002 in FIG. 10 may be implemented by using the transceiver 203 in the network device 20 shown in FIG. 2.

In some embodiments, when the network device 100 in FIG. 10 is a chip or a chip system, a function/implementation process of the transceiver module 1002 may be implemented by using an input/output interface (or a communication interface) of the chip or the chip system, and a function/implementation process of the processing module 1001 may be implemented by using a processor (or a processing circuit) of the chip or the chip system.

The network device 100 provided in this embodiment may perform the foregoing method. Therefore, for technical effects that can be achieved by this embodiment, refer to the foregoing method embodiments. Details are not described herein again.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store necessary program instructions and data. The processor may invoke program code stored in the memory, to indicate the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive the computer-executable instructions (where the computer-executable instructions are stored in the memory, and may be directly read from the memory, or may be read via another component) and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

In some embodiments, an embodiment of this application further provides a communication apparatus. The communication apparatus includes an interface circuit and a logic circuit. The interface circuit is configured to input and/or output information. The logic circuit is configured to perform the method in any one of the foregoing method embodiments, and perform processing based on input and/or generate the output information.

In a possible implementation, when the communication apparatus is configured to implement a function of the terminal device, descriptions are shown as follows.

The input information is the first configuration information. Correspondingly, the performing processing based on the input information includes: when the first configuration information indicates that the terminal device is allowed to reduce a transmit power, reducing a transmit power class based on a power adjustment factor if a difference between reference sensitivity of a first power class and reference sensitivity of a second power class is greater than or equal to a first threshold in configured channel bandwidth.

In some possible designs, the input information may alternatively be second configuration information and indication information. Correspondingly, the performing processing based on the input information includes: determining a first threshold based on the second configuration information and the indication information.

In another possible implementation, when the communication apparatus is configured to implement a function of the network device in the embodiment shown in FIG. 3, descriptions are shown as follows.

The output information is first configuration information, and the first configuration information indicates that a terminal device is allowed to reduce a transmit power based on cause of maximum sensitivity degradation MSD.

Optionally, the output information may alternatively be second configuration information and indication information.

In still another possible implementation, when the communication apparatus is configured to implement a function of the network device in the embodiment shown in FIG. 5, descriptions are shown as follows.

The output information may be configuration information and indication information. The configuration information is used to configure cell-level uplink channel bandwidth for a terminal device. The indication information is used to activate a first bandwidth part BWP of the uplink channel bandwidth, and in a plurality of BWPs of the uplink channel bandwidth, the first BWP is a BWP whose bandwidth is the smallest and/or a BWP whose lower boundary is farthest from a receive band.

In a possible product form, the terminal device and the network device in embodiments of this application may be implemented by using the following: one or more field programmable gate arrays (field programmable gate array, FPGA), a programmable logic device (programmable logic device, PLD), a controller, a state machine, gate logic, and a discrete hardware part, any other proper circuit, or any combination of circuits that can perform various functions described throughout this application.

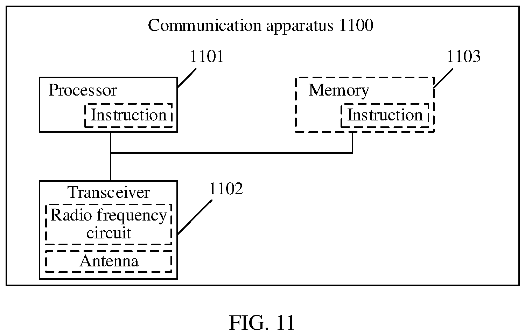

In another possible product form, the network device and the terminal device in embodiments of this application may be implemented by using a general bus architecture. For ease of description, FIG. 11 is a diagram of a structure of a communication apparatus 1100 according to an embodiment of this application. The communication apparatus 1100 includes a processor 1101 and a transceiver 1102. The communication apparatus 1100 may be a network device, a terminal device, or a chip on a network device or a chip on a terminal device. FIG. 11 shows only main parts of the communication apparatus 1100. In addition to the processor 1101 and the transceiver 1102, the communication apparatus may further include a memory 1103 and an input/output apparatus (which are not shown in the figure).

The processor 1101 is mainly configured to process a communication protocol and communication data, control the entire communication apparatus, execute a software program, and process data of the software program. The memory 1103 is mainly configured to store the software program and the data. The transceiver 1102 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, a keyboard or the like, is mainly configured to receive data input by a user and output data to the user.

The processor 1101, the transceiver 1102, and the memory 1103 may be connected through a communication bus.

After the communication apparatus is powered on, the processor 1101 may read the software program in the memory 1103, interpret and execute instructions of the software program, and process the data of the software program. When data needs to be sent wirelessly, after performing baseband processing on the to-be-sent data, the processor 1101 outputs a baseband signal to the radio frequency circuit; and the radio frequency circuit performs radio frequency processing on the baseband signal and then sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1101. The processor 1101 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

This application further provides a computer-readable storage medium. The computer-readable storage medium stores a computer program or instructions. When the computer program is executed or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for detailed working processes of the foregoing system, apparatuses, and units, refer to corresponding processes in the foregoing method embodiments. Details are not described herein again.

It may be understood that the system, apparatuses, and methods described in this application may alternatively be implemented in another manner. For example, the described apparatus embodiments are merely examples. For example, division into the units is merely logical function division and may be another division during actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or units may be implemented in electronic, mechanical, or other forms.

The units described as separate parts may be or may not be physically separate, in other words, may be located in a same place or distributed on a plurality of network units. Parts displayed as units may be or may be not physical units. A part or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When a software program is used to implement embodiments, all or a part of embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by a computer, or a data storage device, such as a server, a data center, or the like, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the word "comprising" (comprising) does not exclude another component or step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the spirit and scope of this application. In this way, this application is intended to cover these modifications and variations provided that the modifications and variations of this application fall within the scope of the claims of this application and their equivalent technologies.

**Claims**

1. A communication method, wherein the method is applied to a terminal device, a power class of the terminal device is a first power class, and the method comprises:

   receiving first configuration information from a network device; and

when the first configuration information indicates that the terminal device is allowed to reduce a transmit power, reducing a transmit power class based on a power adjustment factor if a difference between reference sensitivity of the first power class and reference sensitivity of a second power class is greater than or equal to a first threshold in configured channel bandwidth.

2. The method according to claim 1, wherein the power adjustment factor is a first value, and the first value is a difference between a power class power corresponding to the first power class and a power class power corresponding to the second power class.

3. The method according to claim 1 or 2, wherein a value range of the first threshold is [2, 5] dB.

4. The method according to any one of claims 1 to 3, wherein the first threshold is configured by the network device.

5. The method according to claim 4, wherein the method further comprises:

receiving second configuration information from the network device, wherein the second configuration information is used to configure a threshold set, and the threshold set comprises the first threshold; and
receiving indication information from the network device, wherein the indication information is used to activate the first threshold.

6. The method according to any one of claims 1 to 5, wherein the reducing a transmit power class based on a power adjustment factor if a difference between reference sensitivity of the first power class and reference sensitivity of a second power class is greater than or equal to a first threshold comprises:
reducing the transmit power class based on the power adjustment factor if the difference between the reference sensitivity of the first power class and the reference sensitivity of the second power class is greater than or equal to the first threshold and a signal to interference plus noise ratio SINR of intra-frequency measurement performed by the terminal device in a radio resource control RRC connected state is less than or equal to a second threshold.

7. The method according to any one of claims 1 to 6, wherein that the first configuration information indicates that the terminal device is allowed to reduce a transmit power comprises:
the first configuration information indicates that the terminal device is allowed to reduce the transmit power based on cause of maximum sensitivity degradation MSD.

8. A communication method, wherein the method is applied to a network device, and the method comprises:

generating first configuration information, wherein the first configuration information indicates that a terminal device is allowed to reduce a transmit power based on cause of maximum sensitivity degradation MSD; and
sending the first configuration information to the terminal device.

9. The method according to claim 8, wherein the method further comprises:
configuring a first threshold for the terminal device, wherein the first threshold is used by the terminal device to determine whether to reduce a transmit power class.

10. The method according to claim 9, wherein the configuring a first threshold for the terminal device comprises:

sending second configuration information to the terminal device, wherein the second configuration information is used to configure a threshold set, and the threshold set comprises the first threshold; and
sending indication information to the terminal device, wherein the indication information is used to activate the first threshold.

11. The method according to claim 9 or 10, wherein a value range of the first threshold is [2, 5] dB.

12. A bandwidth configuration information sending method, wherein the method comprises:

sending configuration information to a terminal device, wherein the configuration information is used to configure cell-level uplink channel bandwidth for the terminal device; and
sending indication information to the terminal device if the uplink channel bandwidth meets a first condition, wherein the indication information is used to activate a first bandwidth part BWP of the uplink channel bandwidth, and in a plurality of BWPs of the uplink channel bandwidth, the first BWP is a BWP whose bandwidth is the smallest and/or a BWP whose lower boundary is farthest from a receive band.

13. The method according to claim 12, wherein the first condition comprises:

in the uplink channel bandwidth, a difference between reference sensitivity of a first power class and reference sensitivity of a second power class is greater than or equal to a first threshold;
or
the uplink channel bandwidth is greater than or equal to a second threshold.

14. The method according to claim 13, wherein a value range of the first threshold is [2, 5] dB, and/or the second threshold is 20 MHz.

15. A communication apparatus, wherein a power class of the communication apparatus is a first power class, and the communication apparatus comprises a transceiver module and a processing module, wherein

the transceiver module is configured to receive first configuration information from a network device; and
the processing module is configured to: when the first configuration information indicates that the communication apparatus is allowed to reduce a transmit power, reduce a transmit power class based on a power adjustment factor if a difference between reference sensitivity of the first power class and reference sensitivity of a second power class is greater than or equal to a first threshold in configured channel bandwidth.

16. The communication apparatus according to claim 15, wherein the power adjustment factor is a first value, and the first value is a difference between a power class power corresponding to the first power class and a power class power corresponding to the second power class.

17. The communication apparatus according to claim 15 or 16, wherein a value range of the first threshold is [2, 5] dB.

18. The communication apparatus according to any one of claims 15 to 17, wherein the first threshold is configured by the network device.

19. The communication apparatus according to claim 18, wherein

the transceiver module is further configured to receive second configuration information from the network device, wherein the second configuration information is used to configure a threshold set, and the threshold set comprises the first threshold; and
the transceiver module is further configured to receive indication information from the network device, wherein the indication information is used to activate the first threshold.

20. The communication apparatus according to any one of claims 15 to 19, wherein that the processing module is configured to reduce a transmit power class based on a power adjustment factor if a difference between reference sensitivity of the first power class and reference sensitivity of a second power class is greater than or equal to a first threshold comprises:
the processing module is configured to reduce the transmit power class based on the power adjustment factor if the difference between the reference sensitivity of the first power class and the reference sensitivity of the second power class is greater than or equal to the first threshold and a signal to interference plus noise ratio SINR of intra-frequency measurement performed by the communication apparatus in a radio resource control RRC connected state is less than or equal to a second threshold.

21. The communication apparatus according to any one of claims 15 to 20, wherein that the first configuration information indicates that the communication apparatus is allowed to reduce a transmit power comprises:
the first configuration information indicates that the communication apparatus is allowed to reduce the transmit power based on cause of maximum sensitivity degradation MSD.

22. A communication apparatus, wherein the communication apparatus comprises a transceiver module and a processing module, wherein

the processing module is configured to generate first configuration information, wherein the first configuration information indicates that a terminal device is allowed to reduce a transmit power based on cause of maximum sensitivity degradation MSD; and
the transceiver module is configured to send the first configuration information to the terminal device.

23. The communication apparatus according to claim 22, wherein
the processing module is further configured to configure a first threshold for the terminal device, wherein the first threshold is used by the terminal device to determine whether to reduce a transmit power class.

24. The communication apparatus according to claim 23, wherein that the processing module is further configured to configure a first threshold for the terminal device comprises:

the processing module is further configured to send second configuration information to the terminal device via the transceiver module, wherein the second configuration information is used to configure a threshold set, and the threshold set comprises the first threshold; and
the processing module is further configured to send indication information to the terminal device via the transceiver module, wherein the indication information is used to activate the first threshold.

25. The communication apparatus according to claim 23 or 24, wherein a value range of the first threshold is [2, 5] dB.

26. A communication apparatus, wherein the communication apparatus comprises a transceiver module and a processing module, wherein

the transceiver module is configured to send configuration information to a terminal device, wherein the configuration information is used to configure cell-level uplink channel bandwidth for the terminal device; and
the processing module is configured to send indication information to the terminal device via the transceiver module when the uplink channel bandwidth meets a first condition, wherein the indication information is used to activate a first bandwidth part BWP of the uplink channel bandwidth, and in a plurality of BWPs of the uplink channel bandwidth, the first BWP is a BWP whose bandwidth is the smallest and/or a BWP whose lower boundary is farthest from a receive band.

27. The communication apparatus according to claim 26, wherein the first condition comprises:

in the uplink channel bandwidth, a difference between reference sensitivity of a first power class and reference sensitivity of a second power class is greater than or equal to a first threshold;
or
the uplink channel bandwidth is greater than or equal to a second threshold.

28. The communication apparatus according to claim 27, wherein a value range of the first threshold is [2, 5] dB, and/or the second threshold is 20 MHz.

29. A communication apparatus, wherein the communication apparatus comprises a processor, wherein
the processor is configured to execute a computer program or instructions, to enable the communication apparatus to perform the method according to any one of claims 1 to 7, to enable the communication apparatus to perform the method according to any one of claims 8 to 11, or to enable the communication apparatus to perform the method according to any one of claims 12 to 14.

30. A computer-readable storage medium, wherein the computer-readable storage medium comprises instructions; and when the instructions are run on a communication apparatus, the method according to any one of claims 1 to 7 is implemented, the method according to any one of claims 8 to 11 is implemented, or the method according to any one of claims 12 to 14 is implemented.

31. A computer program product, wherein the computer program product comprises computer instructions; and when a part or all of the computer instructions are run on a computer, the method according to any one of claims 1 to 7 is performed, the method according to any one of claims 8 to 11 is performed, or the method according to any one of claims 12 to 14 is performed.

FIG. 1

FIG. 2

Network device 20
- Processor 201
- Memory 202
  - Computer program code
- Network interface 203
  - Tx
  - Rx
- 204

Terminal device 30
- Processor 301
- Memory 302
  - Computer program code
- 303
  - Tx
  - Rx
- Output device 304
- Input device 305

```
┌─────────────┐                          ┌─────────────┐
│   Network   │                          │  Terminal   │
│   device    │                          │   device    │
└─────────────┘                          └─────────────┘
┌──────────────────────────────┐
│ S301: Generate first          │
│ configuration                 │
│ information, which indicates  │
│ that the terminal device is   │
│ allowed to reduce a transmit  │
│ power                         │
└──────────────────────────────┘
        S302: First configuration information
                                ──────────────────►
                        ┌────────────────────────────────┐
                        │ S303: Reduce a transmit power   │
                        │ class based on a power          │
                        │ adjustment factor if a          │
                        │ difference between reference    │
                        │ sensitivity of a first power    │
                        │ class and reference sensitivity │
                        │ of a second power class is      │
                        │ greater than or equal to a      │
                        │ first threshold in configured   │
                        │ channel bandwidth               │
                        └────────────────────────────────┘
```

FIG. 3

```
┌─────────────┐                          ┌─────────────┐
│   Network   │                          │  Terminal   │
│   device    │                          │   device    │
└─────────────┘                          └─────────────┘
┌──────────────────────────────┐
│ S301: Generate first          │
│ configuration                 │
│ information, which indicates  │
│ that the terminal device is   │
│ allowed to reduce a transmit  │
│ power                         │
└──────────────────────────────┘
        S302: First configuration information
                                ──────────────────►
            ┌──────────────────────────────────────────┐
            │ S303: Reduce a transmit power class       │
            │ based on a power adjustment factor if a   │
            │ difference between reference sensitivity  │
            │ of a first power class and reference      │
            │ sensitivity of a second power class is    │
            │ greater than or equal to a first          │
            │ threshold and an SINR of RRM intra-       │
            │ frequency measurement performed by the    │
            │ terminal device in an RRC connected state │
            │ is less than or equal to a second         │
            │ threshold in configured channel bandwidth │
            └──────────────────────────────────────────┘
```

FIG. 4

```
┌──────────┐                                      ┌──────────┐
│ Network  │                                      │ Terminal │
│  device  │                                      │  device  │
└────┬─────┘                                      └────┬─────┘
     │     S501: Configuration information,            │
     │     used to configure cell-level uplink         │
     │            channel bandwidth                    │
     │────────────────────────────────────────────────▶│
     │                                                 │
     │     S502: Indication information (which is       │
     │      sent when the uplink channel               │
     │     bandwidth meets a first condition, and       │
     │      is used to activate a first BWP of the      │
     │         uplink channel bandwidth)               │
     │────────────────────────────────────────────────▶│
     │                                                 │
     │                Uplink signal                     │
     │◀ ─ ─ ─ ─ ─ ─ ─ ─ ─ ─ ─ ─ ─ ─ ─ ─ ─ ─ ─ ─ ─ ─ ─ ▶│
     │                                                 │
```

FIG. 5

FIG. 6

FIG. 7

25

Uplink channel bandwidth

BWP #2

BWP #1

BWP #3

BWP #4

Receive band

FIG. 8

Terminal device — 90

Processing module — 901

Transceiver module — 902

FIG. 9

Network device — 100

Processing module — 1001

Transceiver module — 1002

FIG. 10

Communication apparatus 1100

1101                                    1103

Processor                    Memory
Instruction                  Instruction

Transceiver        1102
Radio frequency
circuit
Antenna

FIG. 11

## INTERNATIONAL SEARCH REPORT

International application No.

**PCT/CN2023/070072**

### A. CLASSIFICATION OF SUBJECT MATTER

H04B17/10(2015.01)i;H04W72/04(2023.01)i;H04W52/14(2009.01)i

According to International Patent Classification (IPC) or to both national classification and IPC

### B. FIELDS SEARCHED

Minimum documentation searched (classification system followed by classification symbols)

IPC: H04B H04W

Documentation searched other than minimum documentation to the extent that such documents are included in the fields searched

Electronic data base consulted during the international search (name of data base and, where practicable, search terms used)

USTXT; EPTXT; WOTXT; CNTXT; CNABS; VEN; CNKI; 3GPP: 功率, 功率等级, 降低, 减小, 灵敏度, 干扰, 分配, 选择, 配置, 激活, 带宽, 最小, 最窄, 最远, 发射, 发送, 上行, 间隔, 距离, 相隔, 相距, 宽度, 接收, 下行, power, power class, reduce, decrease, activate, select, bandwidth, BWP, DL, downlink, distance, apart, away from, furthest, minimum, narrowest, sensitivity, interference, UL, uplink

### C. DOCUMENTS CONSIDERED TO BE RELEVANT

| Category* | Citation of document, with indication, where appropriate, of the relevant passages | Relevant to claim No. |
|---|---|---|
| X | WO 2019071544 A1 (GUANGDONG OPPO MOBILE COMMUNICATIONS CO., LTD.) 18 April 2019 (2019-04-18)<br>description, page 7, lines 14-29, page 13, lines 3-9 | 8, 22, 29-31 |
| Y | CN 110870374 A (LG ELECTRONICS INC.) 06 March 2020 (2020-03-06)<br>description, paragraphs [0125]-[0127] | 12, 26, 29-31 |
| Y | WO 2021252211 A1 (QUALCOMM INC.) 16 December 2021 (2021-12-16)<br>description, paragraph [0110] | 12, 26, 29-31 |
| Y | WO 2021252212 A1 (QUALCOMM INC.) 16 December 2021 (2021-12-16)<br>description, paragraph [0106] | 12, 26, 29-31 |
| A | CN 111865535 A (HUAWEI TECHNOLOGIES CO., LTD.) 30 October 2020 (2020-10-30)<br>entire document | 1-31 |
| A | CN 110996382 A (OPPO (CHONGQING) INTELLIGENT TECHNOLOGY CO., LTD.) 10 April 2020 (2020-04-10)<br>entire document | 1-31 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 March 2023** | **07 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2023/070072**

**C.      DOCUMENTS CONSIDERED TO BE RELEVANT**

| Category* | Citation of document, with indication, where appropriate, of the relevant passages | Relevant to claim No. |
|---|---|---|
| A | CN 102387576 A (ZTE CORP.) 21 March 2012 (2012-03-21)<br>entire document | 1-31 |

<div style="text-align:center">

**INTERNATIONAL SEARCH REPORT**
**Information on patent family members**

</div>

International application No.

**PCT/CN2023/070072**

| Patent document cited in search report | | | Publication date (day/month/year) | Patent family member(s) | | | Publication date (day/month/year) |
|---|---|---|---|---|---|---|---|
| WO | 2019071544 | A1 | 18 April 2019 | EP | 3637872 | A1 | 15 April 2020 |
| | | | | EP | 3637872 | A4 | 05 August 2020 |
| | | | | KR | 20200062175 | A | 03 June 2020 |
| | | | | JP | 2021503726 | A | 12 February 2021 |
| | | | | US | 2020245256 | A1 | 30 July 2020 |
| | | | | US | 11330529 | B2 | 10 May 2022 |
| | | | | CN | 111213411 | A | 29 May 2020 |
| | | | | IN | 202017018865 | A | 07 August 2020 |
| CN | 110870374 | A | 06 March 2020 | EP | 3626019 | A1 | 25 March 2020 |
| | | | | EP | 3626019 | A4 | 03 June 2020 |
| | | | | US | 2021092008 | A1 | 25 March 2021 |
| | | | | US | 11451436 | B2 | 20 September 2022 |
| | | | | WO | 2019009665 | A1 | 10 January 2019 |
| WO | 2021252211 | A1 | 16 December 2021 | US | 2021385793 | A1 | 09 December 2021 |
| | | | | IN | 202227059495 | A | 25 November 2022 |
| WO | 2021252212 | A1 | 16 December 2021 | US | 2021385814 | A1 | 09 December 2021 |
| | | | | IN | 202227059637 | A | 25 November 2022 |
| CN | 111865535 | A | 30 October 2020 | None | | | |
| CN | 110996382 | A | 10 April 2020 | None | | | |
| CN | 102387576 | A | 21 March 2012 | CN | 102387576 | B | 20 July 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210016042